# EUROPEAN PATENT SPECIFICATION

(11) **EP 0 706 035 B1**
(45) Date of publication and mention of the grant of the patent: **17.05.2000**
(21) Application number: 95307061.2
(22) Date of filing: 04.10.1995
(51) Int. Cl.: G01G 21/24

(54) **Top pan balance**
Oberschalige Waage
Balance à plateau en tête

(30) Priority: 05.10.1994 JP 24111994
(43) Date of publication of application: 10.04.1996
(73) Proprietor: SHIMADZU CORPORATION, Nakagyo-ku, Kyoto 604 (JP)
(72) Inventor: Komoto, Akira, Shiga 520 (JP); Nishibayashi, Kazuo, Kyoto 601 (JP); Shimauchi, Kunio, Nakagyo-ku 604 (JP); Fukai, Akihiro, Kyoto 615 (JP)
(74) Representative: Harland, Linda Jane

(56) References cited:
- EP-A- 0 291 258
- EP-A- 0 518 202
- DE-C- 3 710 997
- FR-A- 2 149 132

## Description

The present invention relates to weighing apparatus and more particularly to a top scale balance having a Roberval's chain and a lever mechanism for load transmission. It is noted that the present invention can be applied not only to a so-called electronic balance having a load sensing portion of the electromagnetic equilibrium type, but also to a so-called balance having a load cell or the like serving as a load sensing portion.

Fig. 7 (A) and (B) are plan and side views respectively of a conventional top scale balance such as known from EP-A-0 291 258, and Fig. 8 shows the mechanism thereof. In such a top scale balance, a sample pan 20 for receiving the matter to be weighed is supported by a Roberval's chain 10 (which is also called a parallel guide). This restrains the sample pan 20 from being transversely displaced and/or inclined such that the sample pan 20 is vertically moved without horizontal movement (i.e. its position in the horizontal plane is maintained). This prevents the occurrence of an error due to offset placing of a sample on the sample pan 20, i.e., a so-called offset position error (which is also called a four-corner error).

The Roberval's chain 10 has a structure in which a movable post 13 is connected to a stationary post 14 through two parallel horizontal members, i.e., upper and lower horizontal members 11, 12 each provided at both ends thereof with flexible portions 11a, 11b, 12a, 12b which serve as hinge portions. The sample pan 20 is supported by the movable post 13. A load acting on the sample pan 20 will be transmitted through a lever 30 connected to the movable post 13, to a load sensing portion 40 such as a load cell, an electromagnetic equilibrium mechanism or the like.

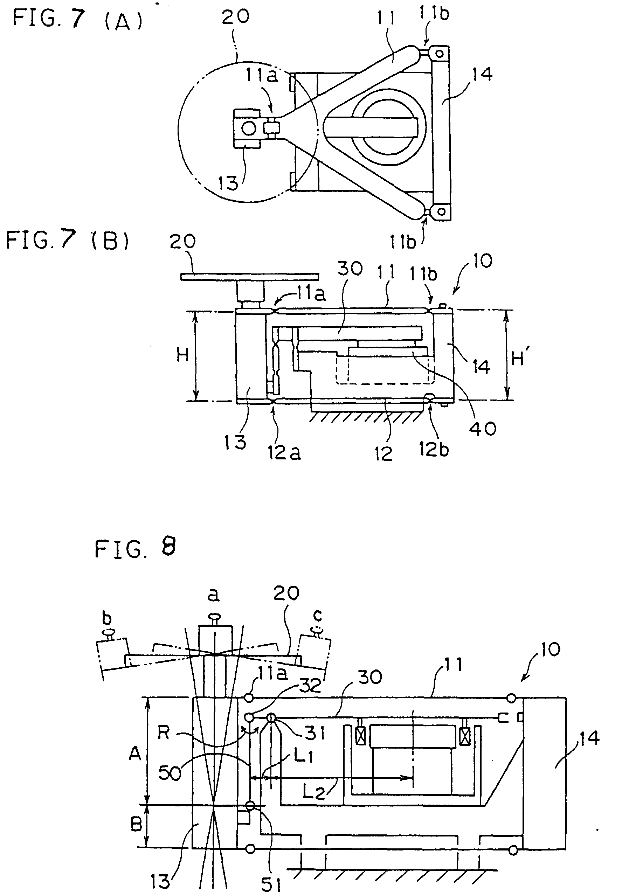

The lever 30 is generally supported by an elastic fulcrum 31 and provided at one end thereof with a point of force 32 which is connected to the movable post 13 through a connecting piece 50. The force exerted on the sample pan 20 is transmitted from the movable post 13 to the lever 30 via the connecting piece 50 which applies a force to the lever at the so-called point of force 32. The lever 30 has the other end connected to the load sensing portion 40 such that a load to be measured and acting on the sample pan 20 is transmitted (as reduced on the scale of 1:several - 1: hundred and dozens) to the load sensing portion 40. The point of force 32 of the lever 30 is flexible in the directions shown by arrows R in Fig. 8 (in the oscillating directions of the lever 30). For connection between the connecting piece 50 and the movable post 13, there is formed an elastic connection fulcrum 51. Thus, provision is made such that the elastic connection fulcrum 51 and the flexible point of force 32 absorb not only a slight displacement of the movable post 13 in the back-and-forth direction due to the application of a load onto the sample pan 20, but also a slight displacement of the point of force 32 in the back-and-forth direction due to the inclination of the lever 30.

In the Roberval's chain 10 having the arrangement above-mentioned, it is important for the upper and lower horizontal members 11, 12 to be parallel if offset errors are to be minimised. More specifically, only when the upper and lower horizontal members 11, 12 are precisely parallel to each other, can the offset position error of a load on the sample pan 20 can be cancelled. That is, an offset position error is produced unless the horizontal members 11, 12 are precisely adjusted such that the distances H, H' in Fig. 7 (B) are precisely equal to each other. In particular, a precise electronic balance of the electromagnetic equilibrium type or the like, requires a precision such that the distances match to within an order of not greater than µm. Such precise adjustment cannot be achieved by measuring the distances H and H'. In an actual adjustment, the parallelism between the horizontal members 11, 12 is fine-adjusted such that, when a load is applied to the sample pan 20 at each of a variety of positions thereof, the measured value of the load at each of the positions undergoes no change.

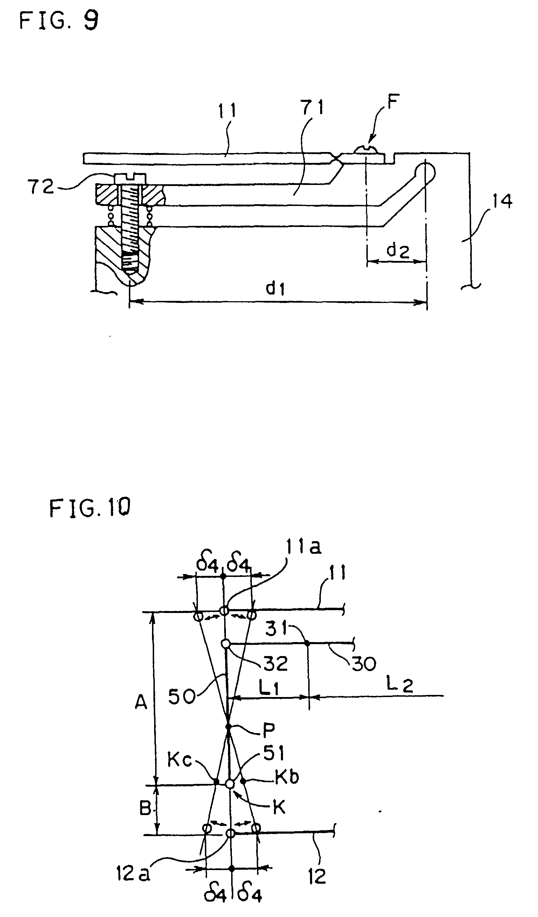

As a mechanism for adjusting the parallelism of the Roberval's chain 10, there is generally known the mechanism shown in Fig. 9. More specifically, an adjusting arm 71 having one end resiliently secured to the stationary post 14 and the other end free includes an adjustment screw 72 near its free end and an attachment portion F near the stationary post 14. The vertical movement of the arm 71 is controlled by rotating the adjusting screw 72 thereby finely moving the attachment portion F of the horizontal member 11 or 12 (e.g. Japanese Utility Model Laid-Open Publication No. 63308522). Where the adjusting screw 72 is a distance dl and the attachment portion F is a distance d2 from the pivot of the adjusting arm, movement of the adjusting screw 72 through a distance x will move the attachment portion F through a distance x.d2/dl.

Other known methods of adjustment include a mechanism in which a differential screw is used as the adjusting screw 72 (Japanese utility Model Laid-Open Publication No. 63-35924), a mechanism in which the horizontal member attachment portion F is finely moved with respect to the stationary post 14 with the use of a wedge principle (Japanese Utility model Laid-Open Publication No. 62-40531) and the like.

With the recent demand for smaller and thinner weighing apparatus or balances, it becomes necessary to increase, as compared with a prior art balance, the lever ratio so as to be able to measure a large load with a small mechanism. However, if a conventional arrangement is adopted as it is and the lever ratio is simply increased so as to reduce the size of the balance, the offset position error becomes great. The prior art mechanisms for balances are not suitable for small precision balances as an increase in the lever ration results in large offset errors and the weighing apparatus then fails to satisfy the balance specifications.

More specifically, when the lever ratio is increased to shorten the distance L1 between the elastic fulcrum 31 and the point of force 32 of the lever 30 to about 1 mm or less, the offset position error particularly in the back-and-forth direction varies dependent on the magnitude of a load. Accordingly, even though the offset position error is precisely adjusted for a certain load using the adjusting mechanism as above-mentioned, there is produced an offset position error for another load. This prevents such a balance from being put to practical use.

The invention in its various aspects is defined in the independent claims below, to which reference should now be made. Advantageous features of the invention are set forth in the dependent claims.

Embodiments of the invention will now be described with reference to the following figures, in which:
Fig. 1 is a side view of a mechanism illustrating an embodiment in which the invention is applied to an electronic balance of the electromagnetic equilibrium type;
Fig. 2 is a view illustrating the arrangement of a specific example in which the upper horizontal member 11 is lower in rigidity than the lower horizontal member 12 in the embodiment in Fig. 1;
Fig. 3 is a view illustrating the operation made at the time when an offset placed load is applied to the mechanism in Fig. 1;
Fig. 4 is a view geometrically illustrating the conditions under which the amount of movement of the elastic connection fulcrum 51 due to an offset placed load, is brought to zero in the mechanism in Fig. 1;
Fig. 5 is a view illustrating an operation of another embodiment of the present invention in which the elastic connection fulcrum 51 and the point of force 32 of the lever 30 are disposed as positionally shifted from the perpendicular line which connects corresponding flexible portions 11a, 12a of the upper and lower horizontal members to each other;
Fig. 6 (A) and Fig. 6 (B) are views illustrating the specific arrangement of a modification of the invention;
Fig. 7 (A) and Fig. 7 (B) are plan and side views of the general arrangement of a top scale balance having a Roberval's chain and a lever;
Fig. 8 is a side view illustrating the mechanism of the balance in Fig. 7;
Fig. 9 illustrates a conventional mechanism for adjusting, with the use of an adjusting arm, the parallelism of a Roberval's chain; and
Fig. 10 is an enlarged view of the main portions of the mechanism in Fig. 8 and illustrates how a variety of component elements are displaced by an offset placed load.

The present invention provides weighing apparatus of the top scale balance type which can solve the problems mentioned above of the conventional top scale balances, and in which, even though the mechanism is made in a compact and thin design with an increased lever ratio, a change in the magnitude of the applied load results in a small change in the offset position error. The arrangement of the present invention enables a balance to be made having a compact and thin design and which is highly precise with a reduced offset position error which does not vary significantly with the magnitude of the load on the pan or sample scale of the weighing apparatus.

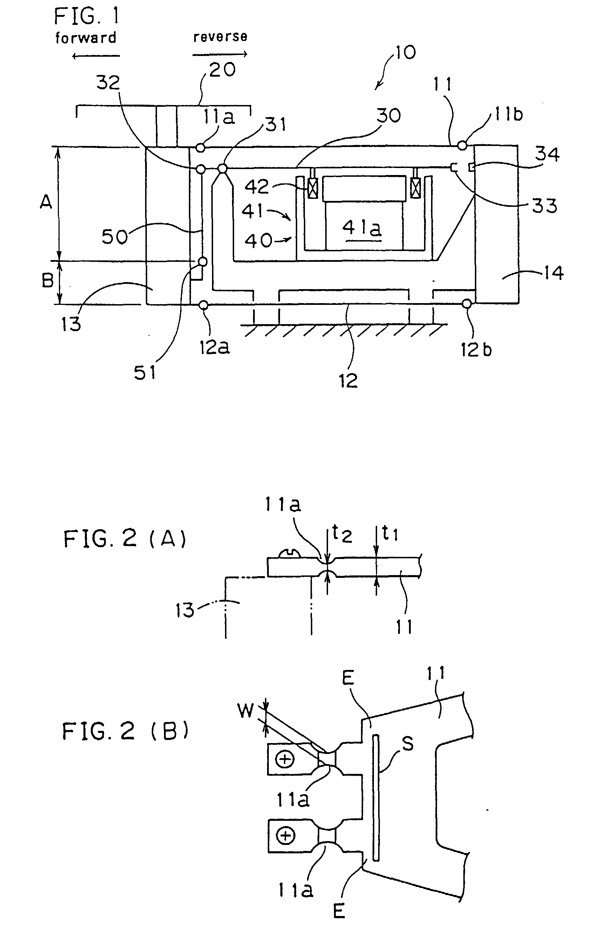

The present invention provides a balance comprising, as shown in Fig. 1: a Roberval's chain 10 having upper and lower parallel horizontal members 11, 12 each provided at both ends thereof with flexible portions; a movable post 13 and a stationary post 14 connected to the movable post 13 by the horizontal members 11, 12; a sample pan 20 supported by the movable post 13; a lever 30 having an elastic fulcrum 31 and a point of force 32, the point of force 32 being connected to the movable post 13 through an elastic connection fulcrum 51 positioned between the upper and lower horizontal members 11, 12; and a load sensing portion 40 to which a load on the sample pan 20 may be transmitted by the lever 30, the balance being characterized in that, of the upper and lower horizontal members 11, 12, the horizontal member nearer to the elastic connection fulcrum 51 (the lower horizontal member 12 in Fig. 1) is greater in apparent rigidity ( i.e. has a higher Young's Modulus) than the other horizontal member (the upper horizontal member 11 in Fig. 1).

The apparent rigidity of the horizontal member 11 or 12 also includes the rigidity of each of the flexible portions 11a, 11b or 12a, 12b formed at their ends, and more precisely also includes the rigidity of the movable or stationary post 13 or 14 in the horizontal direction. Accordingly, the invention above-mentioned also includes an arrangement in which the rigidities of the horizontal members 11, 12 themselves including the rigidities of the flexible portions 11a, 11b, 12a, 12b at their ends, are substantially equal to each other and in which either or both of the movable or stationary post 13 or 14 connected to the end of the horizontal member 11, 12 is weakened such that the rigidity of the combination of the horizontal member/flexible portions/posts remoter from the elastic connection fulcrum 51 (the upper horizontal member 11 in Fig. 1) is weakened as compared with the rigidity of the other horizontal member (the lower horizontal member 12 in Fig. 1).

The present invention has been accomplished based on the realisation that, in a conventional balance of the type having a sample pan on the top of a movable post connected to a beam, the offset position error is increased when the lever ratio exceeds a certain limit because a change in offset placed load results in a change in the lever ratio. This change in lever ratio with applied offset load means that the offset error varies with the magnitude of the offset placed load and is therefore difficult to compensate for.

The inventors have appreciated that the applied load exerts forces which result in changes in length of the lever and horizontal members and that eliminating or compensating for these changes in dimensions which vary with the applied load will reduce the variations in offset error for different loads. The present invention includes a number of arrangements which eliminate the change in lever ratio resulting from an offset placed load, thereby to achieve the predetermined object.

With reference to Figs. 8 and 10, the following description will discuss how, in a conventional balance of the type illustrated in figures 7, 8 and 10, the lever ratio varies with an offset placed load and how such a change in lever ratio due to the offset placed load can be eliminated by the arrangement of each of the present invention.

Fig. 8 is a side view illustrating the mechanism of a balance in which a movable post 13 of a Roberval's chain 10 is connected to a point of force 32 of a lever 30 through an elastic connection fulcrum 51, while Fig. 10 is an enlarged view of the main portions in Fig. 7.

In Fig. 8, when a load on the sample pan 20 is moved from position a to position b, a tensile force is exerted on the upper horizontal member 11 of the Roberval's chain 10, causing the horizontal member 11 to be extended. On the other hand, a compressive force is exerted on the lower horizontal member 12, causing the horizontal member 12 to be compressed. When the load is moved to a position c, the upper horizontal member 11 is compressed and the lower horizontal member 12 is extended.

In a conventional top pan balance of the type above-mentioned, the upper and lower horizontal members 11, 12 are substantially the same in rigidity, and the extension amount of the horizontal member 11 or 12 is substantially equal to the compression amount of the horizontal members 12 or 11. Such an extension/compression amount is referred to as δ4. Dependent on the position of an offset placed load, the component elements are displaced, as shown in Fig. 10, around the median point P of a line connecting a flexible portion 11a of the upper horizontal member 11 to the corresponding flexible portion 12a of the lower horizontal member 12.

Generally the precision of the balance is better, the longer the distance between the point of force 32 and the elastic connection fulcrum 51. Accordingly, the vertical position of the elastic connection fulcrum 51 is usually chosen so as to be below the center position between the upper and lower horizontal members 11, 12. That is, A is greater than B in figures 8 and 10. Accordingly, and as shown in figure 10 the elastic connection fulcrum 51 is moved from a position K at the time when a load is placed on the sample pan 20 at the center a thereof, to a position Kb at the time when the load is moved to the position b, and to a position Kc at the time when the load is moved to the position c.

When the elastic connection fulcrum 51 is moved to the position Kb, the distance L1' between the point of force and the elastic fulcrum 31 of the lever 30 is smaller than the distance L1 and the lever ratio changes from L1/L2 to L1'/L2 (in which L1' is smaller than L1). On the other hand, when the elastic connection fulcrum 51 is moved to the position Kc, L1 is increased and the lever ratio is changed to L1"/L2 (in which L1" is greater than L1). Consider the situation where a load within the weighing range of the balance, e.g., a load of 2 kgs, is actually placed on the sample pan 20. Then, in the prior art balance the adjustment mechanism shown in Fig. 9 is operated to adjust the parallelism of the Roberval's chain 10 such that the displayed value of the weight undergoes no change as the position of the load on the sample pan is varied. Thus, there is provided a state where the offset position error is equal to 0. In this case, it means that the error due to the change in lever ratio above-mentioned is corrected by changing the configuration of the Roberval's chain 10(i.e. putting the parallelism of the chain out of order). Then, consider the situation where, after completion of the adjustment described above, a load having a different weight, e.g., 4 kgs, is moved on the sample pan 20. In this case, when the load of 4 kgs is moved by a distance equal to half of the distance by which the load of 2 kgs was moved, the moment applied to the sample pan 20 becomes equal to that for the load of 2 kgs, and the tensile force and the compressive forces exerted on the upper and lower horizontal members 11, 12 become equal to those exerted by the 2 kgs load, and the movement amount of the point K is also equal to that resulting from the movement of the 2 kg load through twice the distance. However since the load is doubled the error due to a change in lever ratio is doubled. Accordingly, the amount of correction made for the load of 2 kgs is not sufficient for the load of 4 kgs, thus producing an error. Furthermore the offset position for the double load is actually the same as for the original 2 kg load and not merely half. Thus, the error for the load of 4 kgs is further increased.

The foregoing has discussed the reason of why the offset position error is increased when the lever ratio becomes great and the distance L1 is as short as about 1 mm or less.

In view of the foregoing, the present invention is arranged to eliminate the movement of the point K (elastic connection fulcrum 51) upon application of an offset placed load, thereby to prevent the lever ratio from being changed due to the offset placed load.

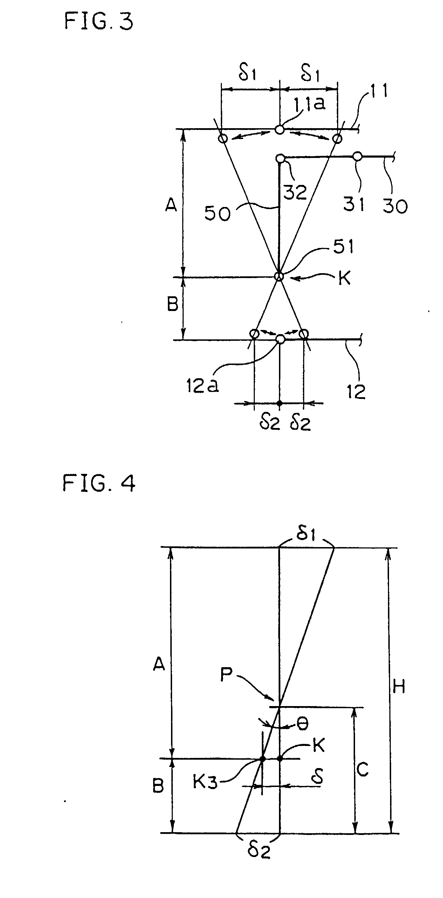

More specifically, in the embodiment of the invention, there is used an arrangement in which the elastic connection fulcrum 51 is located closer to one of the horizontal members as is conventionally done, and in which the horizontal member nearer to the elastic connection fulcrum 51 is higher in apparent rigidity than the other horizontal member. Accordingly, the amounts of extension and compression of the upper and lower horizontal members or the lower and upper horizontal members are different from each other, thus preventing the point K from being moved. When the lower horizontal member 12 is nearer to the elastic connection fulcrum 51 as in the example above-mentioned, the lower horizontal member 12 is higher in rigidity than the upper horizontal member 11. In this case, there is established a relationship of δ1 > δ 2, as shown in Fig. 3, in which δ1 is the amount of extension or compression of the upper horizontal member 11 due to an offset placed load and δ2 is the amount of compression or extension of the lower horizontal member 12 due to the offset placed load. Thus, the amount of movement of the point K is small. Theoretically, the movement of the point K is eliminated when the ratio between δ1 and δ2 is made equal to the ratio between A and B as follows;$\text{δ1 / δ2 = A/B}$

The following description will prove the foregoing.

As geometrically shown in Fig. 4, the following relationships are established:$\text{δ = tan θ (C-B)}$$\text{tan θ =} \frac{\text{δ1 + δ2}}{\text{H}}$$\frac{\text{C}}{\text{δ2}} \text{=} \frac{\text{H-C}}{\text{δ1}} \text{∴ C=} \frac{\text{δ2·H}}{\text{δ1+δ2}}$ 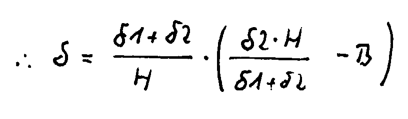 $\text{∴ δ = δ2 -} \frac{\text{δ1 + δ2}}{\text{H}} \text{· B}$ wherein C is the distance between the median point P which is the center of displacement of respective component elements, and the lower horizontal member 11, θ is the angle at which the line connecting a flexible portion 11a of the upper horizontal member 11 at the side of the movable post 13, to a flexible portion 12a of the lower horizontal member 12 at the side of the movable post 13, is inclined with respect to the perpendicular line by the offset placed load, and δ is the amount of movement of the point K at that time.

In order that the movement of the point K due to the offset placed load is equal to O, O is put into δ in the equation (5) and the following equations are then established:$\text{δ2 =} \frac{\text{B}}{\text{H}} \text{(δ1 + δ2)}$$\frac{\text{B}}{\text{H}} \text{=} \frac{\text{δ2}}{\text{δ1 + δ2}} \text{, ∴ δ2A = δ1B}$

Accordingly, when the equation (1) is satisfied, the movement of the point K is eliminated.

Also, by weakening the rigidity of the movable or stationary post 13 or 14 in the horizontal direction, the upper horizontal member 11 remoter from the elastic connection fulcrum 51 can have its apparent rigidity lowered with respect to the lower horizontal member 12. Accordingly, when the rigidity of the movable or stationary post 13 or 14 is intentionally weakened with no difference in rigidity between the upper and lower horizontal members 11, 12, there are produced effects equivalent to those produced by the arrangement in which the horizontal member 11 itself is weakened in rigidity in comparison with the horizontal member 12 itself.

Turning now to a more detailed description of preferred embodiments of the invention.

Fig. 1 is a side view of the mechanism of a preferred embodiment in which the invention is applied to an electronic balance of the electromagnetic equilibrium type.

A Roberval's chain 10 has a basic structure, equivalent to a conventional one shown in Figs. 7 and 8, in which a movable post 13 is connected to a stationary post 14 through upper and lower horizontal members 11, 12 each provided at both ends thereof with flexible portions 11a, 11b or 12a, 12b and in which a sample pan 20 is supported by the movable post 13.

As in the conventional balance, a load acting on the movable post 13 is transmitted, through a lever 30 supported by an elastic fulcrum 31, to an electromagnetic force generating device 40 serving as a load sensing portion. More specifically, a point of force 32 disposed at one end of the lever 30 is connected to the movable post 13 through an elastic connection fulcrum 51 by a connecting piece 50. A force coil 42 of the electromagnetic force generating device 40 is secured to the lever 30 at a point on the lever on the portion of the lever on the other side of the elastic fulcrum 31 to that on which the point of force 32 is located. In the electromagnetic force generating device 40, the force coil 42 secured to the lever 30 is movably disposed in a static magnetic field generated by a magnetic circuit 41 mainly comprising a permanent magnet 41a. The displacement of the lever 30 is detected by a displacement sensor 34 for detecting the position of a slit 33 provided in the other end of the lever 30. The electric current flowing in the force coil 42 is controlled such that the result of displacement detection is zero at all times. The load on the sample pan 20 is detected according to the magnitude of this electric current.

The vertical position of the elastic connection fulcrum 51 is nearer to the lower horizontal member 12 of the Roberval's chain 10 than to the upper horizontal member 11. That is, A is greater than B where A is the vertical distance between the upper horizontal member 11 and the elastic connection fulcrum 51 and B is the vertical distance between the lower horizontal member 12 and the elastic connection fulcrum 51.

The lower horizontal member 12 is higher in rigidity than the upper horizontal member 11. More specifically, as shown in Fig. 2 (A), the upper horizontal member 11 is smaller in the thickness tl of the main body than the lower horizontal member 12, or the upper horizontal member 11 is smaller in the thickness t2 of each of the flexible portions than the lower horizontal member 12. Further, the upper horizontal member 11 is narrower in the width of the main body than the lower horizontal member 12.

Alternately, the upper and lower horizontal members 11, 12 are made equal in these thicknesses t1 and t2 to each other while a slit S is formed in only the upper horizontal member 11 to form an elastic portion E, as shown in Fig. 2 (B) which is a partial plan view of the upper horizontal member 11.

Alternately, the width w of each of the flexible portions 11a,11b of the upper horizontal member 11 is made smaller than that of each of the flexible portions 12a, 12b of the lower horizontal member 12 (See Fig. 2(B)).

The ratio in rigidity between the upper and lower horizontal members 11, 12 is set such that$\text{δ1/δ2 ≒ A/B}$ in which δ1 is the extension/compression amount of the upper horizontal member 11 due to the offset placed load and δ2 is the compression/extension amount of the lower horizontal member 12 due to the offset placed load.

In the embodiment above-mentioned, it is now supposed that the equation (8) is satisfied. As shown in Fig. 3, even though the upper and lower horizontal members 11, 12 are extended or compressed due to the offset placed load, the elastic connection fulcrum 51 is hardly moved. Thus, even though the lever ratio is increased and the distance between the elastic fulcrum 31 and the point of force 32 of the lever 30 is reduced to about 1 mm or less, the offset placed load is not increased.

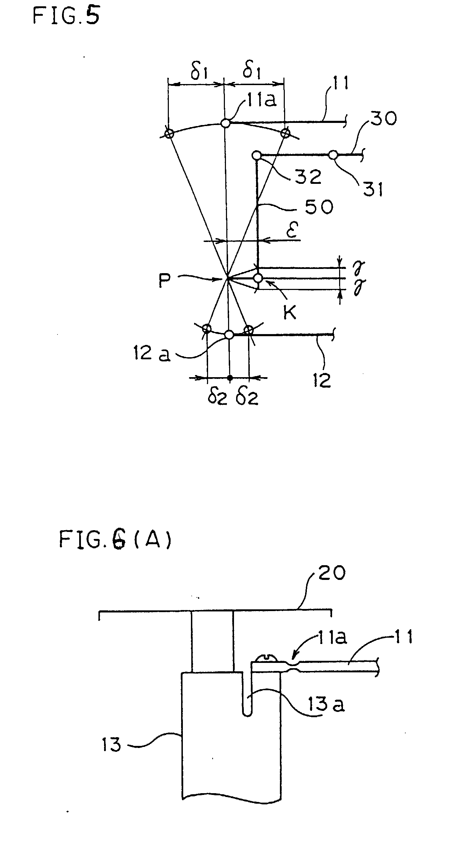

In the embodiment above-mentioned, both the elastic connection fulcrum 51 and the point of force 32 of the lever 30, are located in the perpendicular line which connects the corresponding flexible portions 11a, 12a of the upper and lower horizontal members 11, 12 to each other. This arrangement is ideal in view of the positional relationship. However, the present invention is not always required to be arranged in the manner above-mentioned. As a matter of fact, the elastic connection fulcrum 51 and the point of force 32 may positionally be shifted by E from the perpendicular line which connects the corresponding upper and lower flexible portions 11a, 12a to each other, as shown in Fig. 5. More specifically, in order to prepare a variety of types of scales/balances of the same series having different weighing ranges, each scale/balance manufacturer generally provides scales/balances respectively having a variety of lever ratios according to the weighing ranges. It is therefore difficult to apply the ideal positional relationship above-mentioned to each of all the types of scales/balances. Thus, it is more preferable to select such a positional relationship with attention so placed as to obtain the desired resolution of weighing range/sensitivity which is the most difficult function to achieve.

It is now supposed that there is adopted the positional relationship as shown in Fig. 5. The point K at which the elastic connection fulcrum 51 is positioned, is vertically moved by γ when the upper and lower horizontal members 11, 12 are extended/compressed due to an offset placed load. However, since the lever 30 is maintained at a constant posture by the electromagnetic force generated by the electromagnetic force generating device 40, it is the movable post 13 that is vertically moved. When the movable post 13 is vertically moved, the upper and lower horizontal members 11, 12 of the Roberval's chain 10 are inclined at the same angle such that the parallelism between the horizontal members 11, 12 does not get out of order. Further, the restoring forces of the flexible portions 11a, 11b, 12a, 12b of the Roberval's chain 10 are in proportion to the inclination of the horizontal members 11, 12 and are not affected so much by the amount of a load. After all, according to the vertical movement amount of the movable post 13 (which is increased in proportion to the moment on the sample pan 20), the parallelism of the Roberval's chain 10 can be adjusted such that the error is brought to zero. The foregoing can also be applied to each of the embodiments shown

Further, it was made sure that no problem was encountered in the range of ε ≤ about 3 mm.

It is a matter of course that the extension/compression amounts δ1, δ2, δ3 of the upper and lower horizontal members 11, 12 of the Roberval's chain 10 in the embodiments above-mentioned, must include not only the extension/compression of the horizontal members 11, 12 themselves, but also the flexure of the flexible portions 11a, 11b, 12a, 12b. Accordingly, the rigidities of the upper and lower horizontal members 11, 12 also include the rigidities of the flexible portions 11a, 11b, 12a, 12b.

The substantial rigidity of each of the horizontal members 11, 12 includes an influence of the rigidity of the movable or stationary post 13 or 14 to which the horizontal members 11, 12 are fixed, when the rigidity of the movable or stationary post 13 or 14 is too weak to be disregarded.

As a modification of the first embodiment in which there is provided a difference in rigidity between the upper and lower horizontal members 11, 12, the movable or stationary post 13 or 14 may be reduced in rigidity such that the rigidity of the horizontal member remoter from the elastic connection fulcrum 51, i.e., the rigidity of the upper horizontal member 11 in the embodiment shown in Fig. 1, is made apparently weaker than the rigidity of the lower horizontal member 12. Such a modification can produce the operational effects equivalent to those produced by the arrangement shown in Figs. 1 and 2. The invention also includes such an arrangement.

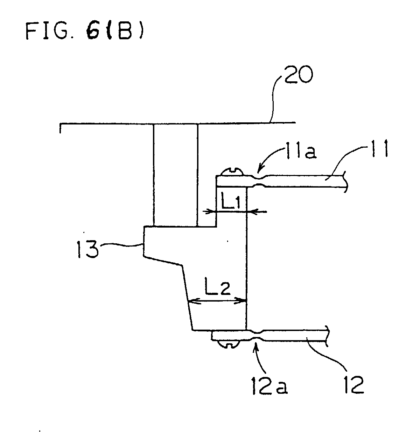

Fig. 6 (A) and Fig. 6 (B) show the arrangements of a specific example in which the rigidity of the upper horizontal member 11 is apparently weakened as compared with the lower horizontal member 12 by weakening the rigidity of the movable post 13.

In Fig. 6 (A), a slit 13a is perpendicularly formed in the movable post 13 in the vicinity of the post portion to which the upper horizontal member 11 is secured. This weakens the rigidity of the movable post 13 in a horizontal direction.

In Fig. 6 (B), the movable post 13 is formed slenderly in the vicinities of the post portions to which the upper horizontal member 11 and the lower horizontal member 12 respectively are secured. In this case, there is established a relationship L1 < L2. This also weakens the rigidity of the movable post 13 in a horizontal direction.

It will be recognized that there are other structures which can be used in order to weaken the rigidity of a movable post 13 or a stationary post 14. For example, by having a movable post 13 or stationary post 14 which is slender along all or part of its height it would be possible to eliminate the movement of the point K as discussed above.

In the arrangement of the invention shown in Fig. 1, the lever 30 is disposed at a position nearer to the upper horizontal member 11 than to the lower horizontal member 12. However, the lever 30 may also be disposed at a position nearer to the lower horizontal member 12. In such an arrangement, the elastic connection fulcrum 51 through which the point of force 32 is connected to the movable post 13, is advantageously disposed at a position nearer to the upper horizontal member 11 in view of precision. Accordingly, the upper horizontal member 11 is required to be increased in rigidity as compared with the lower horizontal member 12. It is a matter of course that the invention also includes such an arrangement.

Further, in each of the embodiments above-mentioned, the present invention is applied to an electronic balance of the electromagnetic equilibrium type using the electromagnetic force generating device 40 as a load sensing portion. It is a matter of course that the present invention can also be applied to an electronic balance having a load sensing portion of other type such as a load cell or the like.

## Claims

1. A balance comprising: a Roberval's chain (10 having two, upper and lower, parallel horizontal members (11, 12) each provided at both ends thereof with flexible portions (11a, 11b, 12a, 12b), a movable post (13), a fixed post (14) connected to said movable post (13) by said horizontal members, a sample scale (20) supported by said movable post; a lever mechanism having a fulcrum (31) and a point of force(32), said point of force being connected to said movable post through a connection fulcrum (51) positioned between said upper and lower horizontal members (11, 12), and a load sensing portion (40) to which a load on said sample scale (20) is to be transmitted by said lever mechanism, said balance being characterised in that, the one (12) of said horizontal members nearer to said connection fulcrum (51) is greater in apparent rigidity that the other horizontal members (11).

2. A balance according to claim 1, characterised in that the horizontal member (12) nearer to said connection fulcrum (51) is greater in the thickness of main body than said other horizontal member (11).

3. A balance according to claim 1, characterised in that said horizontal member (12) nearer to said connection fulcrum (51) is greater in the thickness of each of the flexible portions (11a, 11b, or 12a, 12b) at both ends than said other said horizontal member (11).

4. A balance according to claim 1, characterised in that said horizontal member (12) nearer to said connection fulcrum (51) is greater in width than said other horizontal member (11).

5. A balance according to claim 1, characterised in that said upper and lower horizontal members (11, 12) are the same in thickness of main body and in the thickness of each of the flexible portions (11a, 11b, 12a, 12b) at both ends, and a slit (S) is formed only in the horizontal member (11) remoter from said connection fulcrum (51) such that said remoter horizontal member (11) is more flexible.

6. A balance according to claim 1 wherein the rigidity of the upper and lower horizontal members (11, 12) is substantially the same and further characterised in that said fixed post (14) is weakened in rigidity so that the horizontal member (11) further from the connection fulcrum (51) is apparently of lesser rigidity than the other horizontal member (12).

7. A balance according to claim 1 wherein the rigidity of the upper and lower horizontal members (11, 12) is substantially the same and further characterised in that said movable post (13) is weakened in rigidity so that the horizontal member (11) further from the connection fulcrum (51) is apparently of lesser rigidity than the other horizontal member (12).

## Patentansprüche

1. Waage, die Folgendes umfasst: eine Roberval-Kette (10) mit zwei, einem oberen und einem unteren, parallelen horizontalen Gliedern (11, 12), die jeweils an ihren beiden Enden mit flexiblen Teilen (11a, 11b, 12a, 12b) versehen sind, einen beweglichen Ständer (13), einen festen Ständer (14), der durch die genannten horizontalen Glieder mit dem genannten beweglichen Ständer (13) verbunden ist, eine von dem genannten beweglichen Ständer getragene Probenwaagschale (20), einen Hebelmechanismus, der einen Hebelpunkt (31) und einen Kraftpunkt (32) hat, wobei der genannte Kraftpunkt durch einen Verbindungshebelpunkt (51), der zwischen dem genannten oberen und dem genannten unteren horizontalen Glied (11, 12) angeordnet ist, mit dem genannten beweglichen Ständer verbunden ist, und einen Kraftmessteil (40), auf den eine Last auf der genannten Probenwaagschale (20) von dem genannten Hebelmechanismus zu übertragen ist, wobei die genannte Waaage dadurch gekennzeichnet ist, dass das eine (12) der genannten horizontalen Glieder, das sich näher an dem Verbindungshebelpunkt (51) befindet, eine größere scheinbare Steifigkeit hat als [sic.. *1] das andere horizontale Glied (11).

2. Waage nach Anspruch 1, dadurch gekennzeichnet, dass das genannte horizontale Glied (12), das sich näher an dem genannten Verbindungshebelpunkt (51) befindet, einen dickeren Hauptkörper hat als das genannte andere horizontale Glied (11).

3. Waage nach Anspruch 1, dadurch gekennzeichnet, dass bei dem genannten horizontalen Glied (12), das sich näher an dem genannten Verbindungshebelpunkt (51) befindet, jedes der flexiblen Teile (11a, 11b oder 12a, 12b) an beiden Enden dicker ist als bei dem genannten anderen horizontalen Glied (11).

4. Waage nach Anspruch 1, dadurch gekennzeichnet, dass das genannte horizontale Glied (12), das sich näher an dem genannten Verbindungshebelpunkt (51) befindet, eine größere Breite hat als das genannte andere horizontale Glied (11).

5. Waage nach Anspruch 1, dadurch gekennzeichnet, dass bei dem genannten oberen und unteren horizontalen Glied (11, 12) die Dicke des Hauptkörpers und die Dicke jedes der flexiblen Teile (11a, 11b, 12a, 12b) an beiden Enden gleich ist und dass sich nur in dem weiter von dem genannten Verbindungshebelpunkt (51) entfernten horizontalen Glied (11) ein Schlitz befindet, so dass das genannte weiter entfernte horizontale Glied (11) flexibler ist.

6. Waage nach Anspruch 1, bei der die Steifigkeit des oberen und des unteren horizontalen Glieds (11, 12) weitgehend gleich ist, und des Weiteren dadurch gekennzeichnet, dass die Steifigkeit des genannten festen Ständers (14) geschwächt ist, so dass das weiter von dem genannten Verbindungshebelpunkt (51) befindliche horizontale Glied (11) anscheinend eine geringere Steifigkeit aufweist als das andere horizontale Glied (12).

7. Waage nach Anspruch 1, bei der die Steifigkeit des oberen und des unteren horizontalen Glieds (11, 12) weitgehend gleich ist, und des Weiteren dadurch gekennzeichnet, dass die Steifigkeit des genannten beweglichen Ständers (13) geschwächt ist, so dass das weiter von dem genannten Verbindungshebelpunkt (51) befindliche horizontale Glied (11) anscheinend eine geringere Steifigkeit aufweist als das andere horizontale Glied (12).

## Revendications

1. Balance comprenant une chaîne de Roberval (10) ayant deux éléments horizontaux parallèles, supérieur et inférieur, (11, 12) munis chacun à leurs deux extrémités de parties flexibles (11a, 11b, 12a, 12b), un montant mobile (13), un montant fixe (14) raccordé audit montant mobile (13) par lesdits éléments horizontaux, un plateau pour échantillons (20) supporté par ledit montant mobile ; un mécanisme de levier ayant un point d'appui (31) et un point de force (32), ledit point de force étant raccordé audit montant mobile au moyen d'un point d'appui de raccordement (51) positionné entre lesdits éléments horizontaux supérieur et inférieur (11, 12), et une partie de détection de charge (40) à laquelle une charge sur ledit plateau pour échantillons (20) sera transmise par ledit mécanisme de levier, ladite balance étant caractérisée en ce que l'élément (12) desdits éléments horizontaux le plus proche dudit point d'appui de raccordement (51) est d'une rigidité apparente supérieure à celle de l'autre élément horizontal (11).

2. Balance selon la revendication 1, caractérisée en ce que l'élément horizontal (12) plus proche dudit point d'appui de raccordement (51) est d'une épaisseur supérieure en terme de corps principal à celle dudit autre élément horizontal (11).

3. Balance selon la revendication 1, caractérisée en ce que ledit élément horizontal (12) plus proche dudit point d'appui de raccordement (51) est d'une épaisseur supérieure en terme de chacune des parties flexibles (11a, 11b, ou 12a, 12b) au niveau des deux extrémités à l'épaisseur dudit autre élément horizontal (11).

4. Balance selon la revendication 1, caractérisée en ce que ledit élément horizontal (12) plus proche dudit point d'appui de raccordement (51) est d'une largeur supérieure à celle dudit autre élément horizontal (11).

5. Balance selon la revendication 1, caractérisée en ce que lesdits éléments horizontaux supérieur et inférieur (11, 12) sont les mêmes en épaisseur de corps principal et en épaisseur de chacune des parties flexibles (11a, 11b, 12a, 12b) au niveau des deux extrémités, et une fente (S) est formée uniquement dans l'élément horizontal (11) plus distant dudit point d'appui de raccordement (51) si bien que ledit élément horizontal plus distant (11) est plus flexible.

6. Balance selon la revendication 1, dans laquelle la rigidité des éléments horizontaux supérieur et inférieur (11, 12) est substantiellement la même et en outre caractérisée en ce que ledit montant fixe (14) est d'une rigidité affaiblie si bien que l'élément horizontal (11) plus éloigné du point d'appui de raccordement (51) est apparemment d'une rigidité inférieure à celle de l'autre élément horizontal (12).

7. Balance selon la revendication 1, dans laquelle la rigidité des éléments horizontaux supérieur et inférieur (11, 12) est substantiellement la même et en outre caractérisée en ce que ledit montant mobile (13) est d'une rigidité affaiblie si bien que l'élément horizontal (11) plus éloigné du point d'appui de raccordement (51) est apparemment d'une rigidité inférieure à celle de l'autre élément horizontal (12).
